# EUROPÄISCHE PATENTSCHRIFT

(11) **EP 0 949 631 B1**
(45) Veröffentlichungstag und Bekanntmachung des Hinweises auf die Patenterteilung: **23.10.2002**
(21) Anmeldenummer: 99105778.7
(22) Anmeldetag: 22.03.1999
(51) Int. Cl.: G21C 3/62, G21C 21/00

(54) **Verfahren zur Herstellung von Kernbrennstoff-Sinterkörpern und entsprechende Sinterkörper**
Process for making nuclear fuel sintered body and corresponding sintered body
Procédé pour fabriquer des corps frittés de combustible nucléaire et corps fritté correspondant

(30) Priorität: 20.03.1998 DE 19812320
(43) Veröffentlichungstag der Anmeldung: 13.10.1999
(73) Patentinhaber: Framatome ANP GmbH, 91050 Erlangen (DE)
(72) Erfinder: Gradel, Gerhard, Dipl.-Ing., 91301 Forchheim (DE)
(74) Vertreter: Mörtel & Höfner

(56) Entgegenhaltungen:
- DE-A- 19 627 806

## Beschreibung

Die Erfindung betrifft ein Verfahren zur Herstellung von Kernbrennstoff-Sinterkörpern sowie dadurch herstellbare Sinterkörper.

In Kernreaktoren (insbesondere leichtwassergekühlten Kernreaktoren, also vor allem Druckwasser-Reaktoren und Siedewasser-Reaktoren) wird Brennstoff verwendet, der aus gasförmigem Uran-Hexafluorid hergestellt wird, indem dieses Uran-Hexafluorid auf verschiedene Weise zu Uranoxid konvertiert wird, das zu Grünlingen verpreßt und anschließend zu Sinterkörpern, in der Regel zu Oxid-Tabletten, gesintert wird. Diese Sinterkörper haben beim Reaktorbetrieb hohen Temperaturen und Temperaturwechseln standzuhalten, müssen also eine hohe mechanische Stabilität besitzen.

In modernen Reaktoren werden auch Transurane, wie Plutonium und Thorium oder andere radioaktive Isotopen als Kernbrennstoff eingesetzt, z.B. Mischoxide oder Oxidmischungen mit Uran. Ferner ist es häufig erforderlich, dem Brennstoff einen Neutronenabsorber beizumischen, der zunächst die hohe Radioaktivität von frischem Brennstoff teilweise absorbiert und sich dabei verbraucht (sogenanntes "abbrennbares Neutronengift", z.B. Gadoliniumoxid).

Während des Reaktorbetriebs entsteht im Brennstoff durch die Kernspaltung eine erhebliche Menge radioaktiver Spaltprodukte, die durch ein metallisches Hüllrohr, in dem die Sinterkörper eingeschlossen sind, zurückgehalten werden. Es ist jedoch unvermeidlich, daß z.B. durch kleine mechanische Schäden das Hüllrohr undicht wird und solche radioaktiven Spaltprodukte in das Kühlwasser abgegeben werden. Da moderne Brennelemente auf Betriebsdauern von fünf oder mehr Jahre ausgelegt werden, kann es sich um erhebliche Mengen handeln, die jedoch verringert werden können, wenn die Sinterkörper in der Lage sind, einen erheblichen Teil dieser Spaltprodukte teils in geschlossenen Poren, teils in der oxidischen Matrix selbst zurückzuhalten. Für die Sinterkörper wird daher eine Struktur gesucht, die eine Porosität zwischen etwa 93 und 98 % der theoretischen Dichte eines homogenen Vollkörpers aus diesem Material besitzt, wobei jedoch der Anteil der offenen Poren möglichst klein ist. Ferner geht man davon aus, daß die Sinterkörper weniger Spaltprodukte freisetzen, wenn die gesamte Flächensumme der Grenzflächen zwischen den einzelnen Oxid-Körnern klein ist, d.h. wenn der Sinterkörper nicht von vielen kleinen Körnern, sondern von weniger aber größeren Körnern gebildet ist. Eine mittlere Korngröße unter 8 µm erscheint nachteilig, bevorzugt sollte die mittlere Korngröße mindestens 10 µm betragen.

Das Korngrößenwachstum kann beim Sintern durch längere Sinterdauern und/oder höhere Sintertemperaturen gesteigert werden. Längere Sinterdauern bedeuten jedoch einen verringerten Durchsatz durch die Sinteröfen und mit steigender Sintertemperatur steigt der Verschleiß der Sinteröfen sehr rasch an. Es ist daher üblich, dem Pulver ein Sinterhilfsmittel zuzumischen, bevor die Grünlinge gepreßt werden. Ferner werden dem Brennstoffpulver häufig auch Schmiermittel beigemischt, um den Druck und den Verschleiß beim Pressen der Grünlinge zu verringern. Ein geeignetes Schmiermittel sind z.B. Aluminiumstearate, insbesondere Aluminium-Distearat, da der organische Anteil zu einer wachsartigen Konsistenz führt. Aluminiumstearate führen auch zu einer Vergrößerung des Korns (in Abhängigkeit von der zudosierten Menge), die bis zu 2 µm betragen kann. Beim Sintern zersetzt sich diese Verbindung, wobei der organische Anteil sich verflüchtigt, während zumindest ein Teil des Aluminiums noch im gesinterten Körper nachweisbar ist.

Für die Vergröberung der Kornstruktur kommen unterschiedliche Ursachen in Frage. Möglicherweise setzen solche Sinterhilfsmittel die Grenzflächenenergie herab, so daß das Kornwachstum beschleunigt wird und niedrigere Sinterzeiten bzw. vor allem niedrigere Sintertemperaturen erforderlich werden. Möglicherweise führt der Zusatz aber auch dazu, daß sich an den Grenzflächen eine flüssige Phase bildet, die zu einem schnelleren Zusammenwachsen der Körner führt. Es handelt sich hierbei aber um Oberflächen-Vorgänge, so daß eine feine Verteilung des Sinterhilfsmittels zwischen den Pulverkörnern erforderlich ist.

Eine äußerst wirksame Erhöhung des Kornwachstums wird durch Oxide wie Titanoxid (TiO₂, Ti₂O₃, Ti₃O₄ ....) oder Nioboxid (Nb₂O₅) erreicht, die sowohl den Sintervorgang beschleunigen als auch zu einem gröberen Korn mit einer starken Streuung der Korngrößen führen. Dabei können Körner mit einem Durchmesser von 100 µm und mehr in einer Anzahl auftreten, die für die mechanische Stabilität des Brennstoffs und andere Parameter jedoch ungünstig ist. Für eine industrielle Herstellung aus einer solchen Pulvermischung, die bisher nur in der Literatur beschrieben ist, müßte daher untersucht werden, ob das Korngrößenwachstum durch eine geeignete, sorgfältige Führung des Sintervorgangs kontrolliert werden könnte.

Eine Beschleunigung des Sinterns und Korngrößenwachstums ist erforderlich bei Pulvermischungen, die nur eine geringe Sinteraktivität besitzen, wie z.B. Mischungen aus UO₂ und Gd₂O₃, bei denen sonst die gewünschte Mindestdichte von etwa 93 % theoretischer Dichte nicht erreicht werden kann. Für aktivere Pulvermischungen jedoch besteht die Gefahr einer zu hohen Verdichtung. Dabei ist zu beachten, daß der Brennstoff im Einsatz ja ebenfalls hohen Temperaturen ausgesetzt ist, die zu einem weiteren Kornwachstum, also einem "Nachverdichten" des Brennstoffs führen. Dies tritt vor allem bei Brennstoff auf, dem keine solchen Zusätze beigemischt sind und der eine hohe Anzahl kleiner Poren enthält, die bei der Nachverdichtung weitgehend verschwinden. Es ist daher üblich, der Pulvermischung auch Porenbildner zuzusetzen, z.B. organische Substanzen, die sich beim Sintern verflüchtigen und hauptsächlich größere Poren hinterlassen. Dies ist in beschränktem Umfang bei Aluminium-Distearat, noch stärker aber bei Zinkstearat der Fall.

Diese Stearate haben jedoch den Nachteil, daß bei ihrer thermischen Zersetzung ein Teil des Metalls sich zunächst verflüchtigt und dann an kälteren Stellen des Sinterofens, im Abluft-Kanal oder an anderen Stellen abgeschieden wird und rasch den ordnungsgemäßen Betrieb des Ofens beeinträchtigt.

Ein wirksamer Porenbildner ist auch höher oxidiertes Uranoxid (insbesondere U₃O₈), das daher häufig dem UO₂-Pulver beigemischt wird. Auch Staub oder Schlamm aus bereits gesintertem Brennstoffpulver kann als Porenbildner wirken. Solcher Staub oder Schlamm entsteht z.B. bei der mechanischen Nachbearbeitung (z.B. Schleifen), mit der die Sinterkörper auf ihre Endmaße gebracht werden, und kann auf diese Weise wieder in den Produktionsprozeß eingespeist werden. Außerdem hat oberflächenaktives UO₂-Pulver pyrophore Eigenschaften, die durch Zusatz von U₃O₈ und Schleifschlamm neutralisiert werden können. Beim anschließenden Sintern, das in der Regel bei 1600 bis 1800 °C stattfindet, wird dann eine reduzierende Atmosphäre verwendet, die zu einer stöchiometrischen Zusammensetzung des Urandioxids führt.

Der Erfindung liegt also die Aufgabe zugrunde, Sinterkörper zu schaffen, die auf ökonomische Weise technisch herstellbar sind und die gewünschten Eigenschaften besitzen, insbesondere eine mittlere Korngröße von mindestens 8 µm (vorzugsweise mindestens 10 µm) und höchstens 70 µm und eine Sinterdichte zwischen 93 und 98 % theoretischer Dichte. Dabei soll höchstens 5 % des Volumens von Körnern mit einem Durchmesser über 100 µm gebildet werden.

Dabei geht die Erfindung davon aus, daß ein möglichst geringer Anteil von Körnern erzeugt werden soll, die durch ihre Größe nachteilig wirken könnten. Dabei wird eine mittlere Korngröße nicht über 70 µm angestrebt, bezogen auf das geometrische Mittel und die durch eine optische Ausmessung von Schliffbildern erfaßbare lineare Interzept-Länge. Die statistische Verteilung der Korngrößen soll also möglichst scharf sein, d.h. ein geringeres logarithmisches Streumaß aufweisen. Gemäß der Erfindung ist dies erreichbar durch einen Gehalt von etwa 15 bis 1500 ppm Titan im gesinterten Kernbrennstoff, bezogen auf den Gehalt an Uran. Dieses Titan ist insbesondere durch Zersetzung von Titanstearylat eingebracht, das dem Kernbrennstoff vor dem Sintern zugegeben ist.

Besonders vorteilhaft ist, daß Titanstearylat gleichzeitig als Schmiermittel und Preß-Hilfsmittel beim Pressen der Grünlinge und als Sinterhilfsmittel zur Steigerung des Korngrößenwachstums dient, wobei es auch eine kontrollierte Wirkung als Porenbildner besitzt, nämlich einerseits eine zu hohe Verdichtung des Sinterkörpers sowohl beim Sintern wie beim Nachverdichten verhindert, andererseits aber auch keine zu hohe Porosität hervorruft, sondern gestattet, durch einen dosierten Zusatz eines weiteren Porenbildners die Porosität wunschgemäß einzustellen.

Gemäß der Erfindung werden solche Kernbrennstoff-Sinterkörper dadurch erzeugt, daß dem oxidischen Kernbrennstoff-Pulver vor dem Verpressen zu den Grünlingen als Schmiermittel und/oder Sinterhilfsmittel ein Titanstearylat, insbesondere Titan-Tetrastearylat, also Ti(OC₁₈H₃₇)₄, zugegeben wird.

Als Temperatur beim Sintern kommt der Bereich 1050 bis 2200 °C, vorzugsweise 1100 bis 1850 °C in Frage. Die Sinterdauer ist von der verwendeten Temperatur abhängig und kann zwischen 0,5 und 8 Stunden, vorzugsweise mindestens 1 Stunde und zweckmäßig zwischen 2 und 5 Stunden liegen.

Die Menge des zugegebenen Titanstearylats (im folgenden mit TS bezeichnet) wird dem Sinterverfahren angepaßt und kann im allgemeinen zwischen 15 und 1500 ppm, in der Regel zwischen 40 und 500 ppm, insbesondere zwischen 80 und 200 ppm liegen.

Während die Zugabe eines Aluminiumstearats (im folgenden als AS bezeichnet) nur dazu führt, daß Grünlinge aus dem entsprechend dotierten Pulver beim Sintern einen Korngrößen-Zuwachs von maximal 2 µm zeigen gegenüber Grünlingen aus einem undotierten, aber sonst identischen Pulver, führt eine TS-Dotierung zu einer wesentlich stärkeren Vergröberung des Korns, wobei jedoch die Obergrenze von 70 µm bei Dotierungen unter 1500 ppm nicht erreicht wird. Der Anteil offener Poren an der Porosität ist niedrig und eine Nachverdichtung durch ein Sintern während des Einsatzes im Reaktor ist sehr gering. Die Dichte wird durch TS praktisch nicht beeinflußt. Ferner ist vorteilhaft, daß dieses Additiv praktisch nur einmal an einer Stelle im Produktionsvorgang eingebracht werden muß. So kann es bereits genügen, wenn ein aus dem Pulver hergestelltes Granulat mit TS behandelt wird.

Im Gegensatz zu den bekannten Additiven hat TS nämlich eine Fernwirkung: Die Vergröberung des Korns tritt auch dann auf, wenn ein Granulat aus dem Brennstoffpulver bzw. der zur Herstellung des Grünlings vorgesehenen Pulvermischung aus angereichertem oxidischem Brennstoff und Additiven (z.B. U₃O₈ und/oder zusätzliche Porenbildner) hergestellt wird, wobei das Granulat Durchmesser zwischen 0,5 und 1,5 mm haben kann und das TS nur oberflächlich aufgebracht wird. Auch im Inneren der Granulate tritt dann nach dem Sintern eine gleichmäßige Korngröße auf, deren Zuwachs gegenüber einem undotierten Granulat mehr als 2 µm beträgt. Eine ähnliche oder noch größere Korngrößen-Zunahme tritt zwar auch bei Zusatz von Titanoxid auf, jedoch ist die erhaltene Korngrößen-Verteilung insofern weniger homogen, als Bereiche mit übermäßig großen Körnern auftreten, wobei verhältnismäßig viele Körner einen Durchmesser von 80 µm, 100 µm oder darüber besitzen.

Die Ursache hierfür könnte sein, daß TS bei etwa 200 °C verdampft und mobil wird, während bei Titanoxid der metallische Teil ein immobiles, oxidisches System bildet, das sich nur durch Festkörper-Diffusion (Platzwechsel) mit einer Diffusionslänge (Reichweite) von etwa 5 bis 25 µ ausbreiten kann. TS kann sich also zunächst als wachsartige Verbindung auf alle freien Oberflächen in dem Granulat oder Grünling ausbreiten, wo zunächst praktisch nur offene Poren vorliegen. Jedoch ist die thermische Zersetzung bei etwa 500 °C abgeschlossen, also bei den Temperaturen, bei denen sich erst allmählich durch Verdichtung die Poren schließen. Außerdem können in der Sinteratmosphäre (diese enthält in der Regel Wasserstoff) mobile Verbindungen, z.B. Titan-Wasserstoffverbindungen, entstehen, die sich durch Oberflächendiffusion ausbreiten.

Entsprechende Versuche mit UO₂, das auf verschiedene Weisen, z.B. Trockenkonversion (dry conversion oder integrated dry route), der Ammonium-Uranyl-Carbonat-Methode (AUC), der Fällung mit Peroxid, der Ammoniumdiuranat-Methode, der Uran-Oxalat-Fällung oder auch aus metallischem Uran, wie es z.B. bei der Aufarbeitung von Kernwaffen anfällt, hergestellt wurde, zeigen die gleichen Beobachtungen. Das erfindungsgemäße Verfahren ist daher auch nicht auf Uranoxid beschränkt, sondern kann auch Plutoniumoxid, Thoriumoxid oder andere, bekannte Mischungen umfassen, wobei auch Zusätze wie Ceroxid, Gadoliniumoxid, Erbiumoxid oder ähnliche, bereits als Bestandteile von Kernbrennstoffen vorgesehene Oxide möglich sind.

Insbesondere kann U₃O₈ bereits mit TS dotiert werden, wobei dieses dotierte Oxid dann beim Zumischen zu dem Ausgangspulver als TS-Depot wirkt. Da das TS seine Wirkung auf den Sinterprozeß nicht verliert, wenn UO₂ (z.B. der erwähnte Staub oder Schlamm) an Luft zu U₃O₈ oxidiert wird, wird eine große Flexibilität hinsichtlich der Verfahrensführung erhalten.

Wenn das Additiv dem Pulver beigemischt wird, sollte es selbst auch pulverförmig vorliegen (z.B. eine mittlere Partikelgröße zwischen 0,2 bis 5 µm besitzen). Um durch Mahlen ein derartiges TS-Pulver herzustellen, muß die wachsartige Konsistenz dieser Chemikalie berücksichtigt werden. Für das Mahlen sind daher Verfahren vorteilhaft, bei denen zunächst anfallende, gröbere TS-Teilchen in heftige Bewegung versetzt werden, bei denen sie aneinander reiben. So kann z.B. eine lose Schüttung durch einen heftigen Gasstrom (Wirbelbett-Mühle) oder durch aufeinander gerichtete Gasströme (Luftstrahl-Mühlen) in Bewegung gesetzt werden. Vorteilhaft werden dabei Partikelgrößen von 0,5 bis 3 µm erzeugt.

Ein solches Pulver kann aber auch erzeugt werden, indem flüssiges TS versprüht wird und dabei erstarrt. Man kann aber das flüssige TS auch auf das Pulver (UO₂ oder U₃O₈ und/oder die fertige Pulvermischung) aufbringen, z.B. durch Aufsprühen. Ebenso kann wenigstens ein Teil des Pulvers oder der Pulvermischung mit dem flüssigen TS getränkt werden. Häufig ist zum Herstellen des Brennstoffpulvers ein Drehrohr-Ofen oder ein Wirbelbett-Ofen vorgesehen, wobei dann das TS bereits im flüssigen Zustand in diesem Ofen (z.B. beim letzten Schritt der Pulverherstellung) zugegeben wird.

Diese und weitere vorteilhafte Varianten des Verfahrens sind in den Unteransprüchen angegeben.

Zur Verdeutlichung der Erfindung und ihrer Weiterbildung dienen mehrere Figuren und Ausführungsbeispiele.

Es zeigen:
- FIG 1: eine schematisch dargestellte Anordnung zur erfindungsgemäßen Herstellung des erfindungsgemäßen Sinterkörpers,
- FIG 2 und 3: Schliffbilder des erfindungsgemäß hergestellten Sinterkörpers vor und nach einem Nachsintern,
- FIG 4 und 5: die entsprechenden Schliffbilder für einen Vergleichskörper
- FIG 6: die durch das Nachsintern erhaltene Dichteänderung d' für einen erfindungsgemäßen Sinterkörper, einen Aluminium-dotierten Vergleichskörper und einen undotierten Vergleichskörper
- FIG 7: den Volumenanteil von Körnern mit einem unter einem Grenzwert liegenden Durchmesser, als Funktion des Grenzwerts, bei den nachgesinterten Sinterkörpern,
- FIG 8: die entsprechende Funktion der gesinterten und nicht nachverdichteten Sinterkörper,
- FIG 9: die Verteilung der in Figur 8 gezeigten Volumenanteile auf Korngrößen, die nach ihrem Durchmesser klassifiziert sind,
- FIG 10: die entsprechende Verteilung für die Figur 7,
- FIG 11: die zur Herstellung verschiedener Dichten in den Grünlingen erforderlichen Pressdrucke,
- FIG 12: die beim Sintern von Grünlingen unterschiedlicher Dichte erzeugte Sinterdichte,
- FIG 13: den thermischen Zerfall von Titanstearylat und Aluminiumstearat,
- FIG 14: eine schematische Darstellung einer Einrichtung, mit der das Stearylat in flüssiger Form zum Einbringen in die Pulvermischung verwendet wird,
- FIG 15: eine Einrichtung, um das Titanstearylat bereits bei der Herstellung des Brennstoffpulvers einzubringen, und
- FIG 16: eine schematische Darstellung einer anderen Einrichtung zur erfindungsgemäßen Herstellung der Sinterkörper.

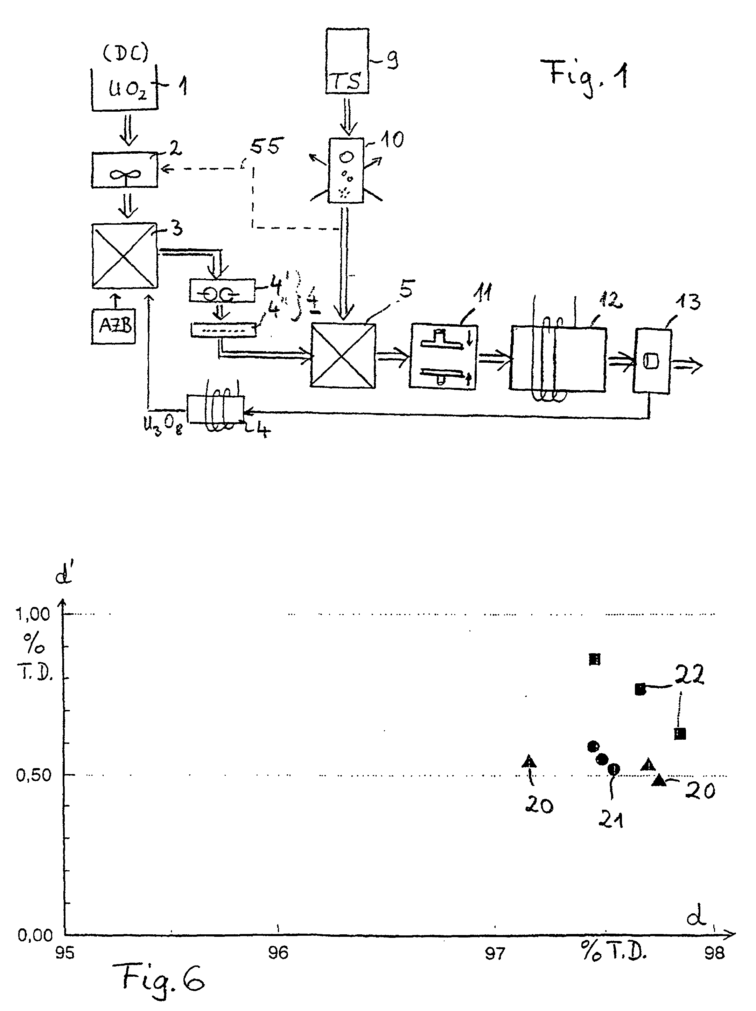

Um das Kernbrennstoff-Pulver für die Sinterkörper gemäß Figur 1 herzustellen, wurde zunächst einer Einrichtung 1, z.B. einer Anlage zur direkten Konversion von UF₆ zu UO₂ Uranpulver entnommen, das anschließend in einer Mühle 2 gemahlen wurde. Dabei wurde durch Zerkleinerung möglicherweise gebildeter Brocken eine homogene Teilchengröße erhalten. Einem Mischer 3 wurde das homogenisierte Pulver zusammen mit etwa 1 Gew.-% Azodicarbonsäurediamid, das auch unter der Bezeichnung AZB bekannt ist und als Porenbildner zur Erzeugung großer Poren dient, in einem Mischer 3 gemischt. Dieses AZB lag als Pulver mit einer Korngröße von etwa 15 µm vor. Diesem Mischer wurde ferner etwa 30 % U₃O₈ beigemischt, das unter Luft in einem Oxidationsofen 4 aus Uranoxid-Abfall der Fertigungsanlage gebildet wurde. Die Pulvermischung wurde anschließend in einer Granulierungseinrichtung 4 granuliert, die in diesem Fall eine Walzeinrichtung 4' umfaßt, um das zu Platten vorkompaktierte Pulver anschließend durch ein Sieb 4" zu drücken.

Dieses Granulat mit einer Teilchengröße von etwa 800 µm wird einem Taumelmischer 5 eingegeben.

Ferner wurden Bruchstücke von wachsartigem Titan-Tetrastearylat, die einem Transportbehälter 9 entnommen wurde, in einer Luftstrahl-Mühle 10 sich kreuzenden Luftströmen ausgesetzt, wodurch die TS-Bruchstücke aneinander zerrieben wurden und ein Pulver mit einer Partikelgröße von etwa 2 µm ergaben. Die Partikelgröße des gemahlenen Titanstearylats sollte allgemein 0,2 bis 5 µm, vorteilhaft 0,5 bis 3 µm betragen.

Etwa 0,2 % dieses TS-Pulvers (etwa 80 ppm Titan), das gleichzeitig als Schmiermittel für die anschließende Presse 11 und als Sinterhilfsmittel zur Vergröberung des Korns beim Sintern dient, wurde im Mischer 5 dem Granulat zugesetzt, aus dem dann in der Presse 11 Grünlinge gepreßt wurden, wobei der Preßdruck so eingestellt wurde, daß eine "Grünlingsdichte" von etwa 6,2 bis 6,4 g/cm³ erzeugt wurde. Die verpreßten Grünlinge wurden anschließend in einem elektrisch beheizten Sinterofen 12 etwa 2,5 Stunden lang bei 1750 °C in trockener Wasserstoffatmosphäre (Sauerstoff-Partialdruck etwa 10⁻¹⁰ Atmosphären bzw. einem Wert, der noch zu keiner Reduktion zu metallischem Titan führt) gesintert.

Die gesinterten Tabletten wurden anschließend in einer Endstufe 13 einer Qualitätskontrolle unterworfen und durch Schleifen auf die erforderlichen Endmaße gebracht. Der Schleif-Schlamm, Bruchstücke von gesinterten und/oder ungesinterten Tabletten und ähnlicher Uranoxid-Abfall wurde gesammelt und in den bereits erwähnten Oxidationsofen 4 eingespeist, wobei auch bereits gesinterte UO₂-Bruchstücke zu einem oxidierten Pulver zerfielen.

Zur genaueren Untersuchung des Betriebsverhaltens der entstandenen Tabletten wurden sie erneut in den Sinterofen gebracht und für 24 Stunden bei 1700 °C nachgesintert.

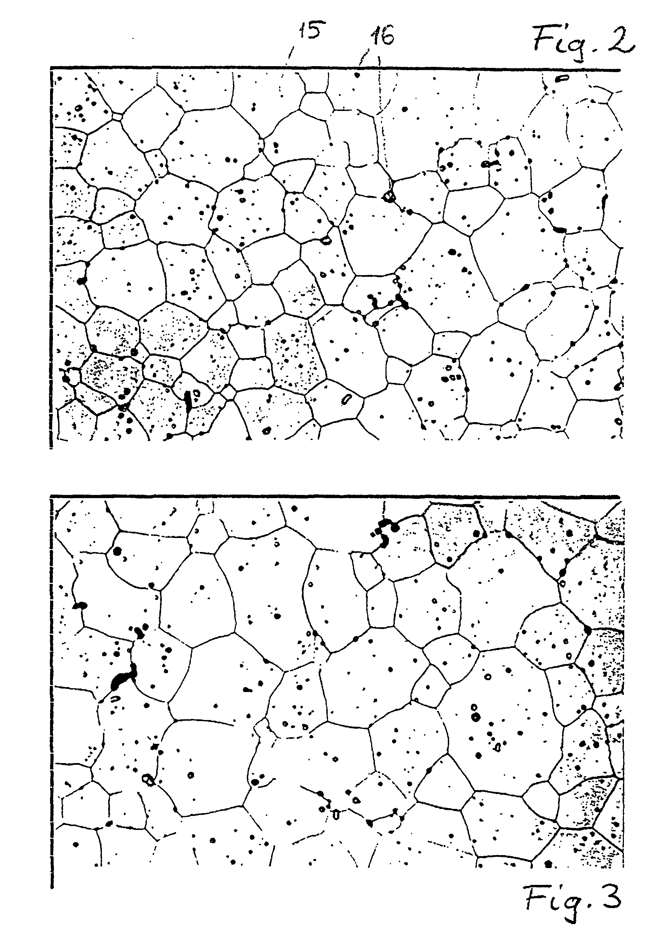

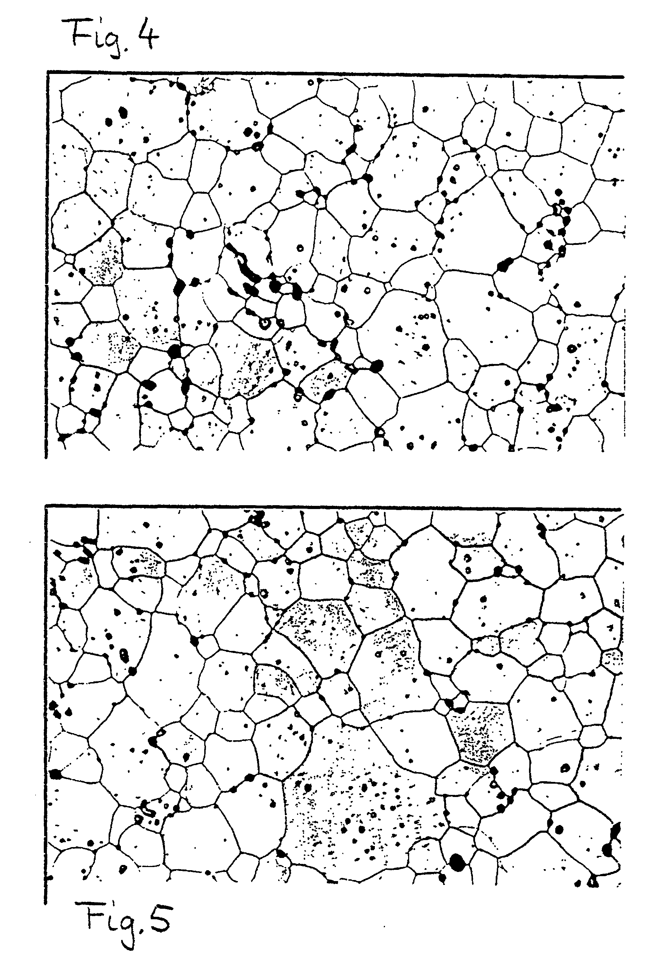

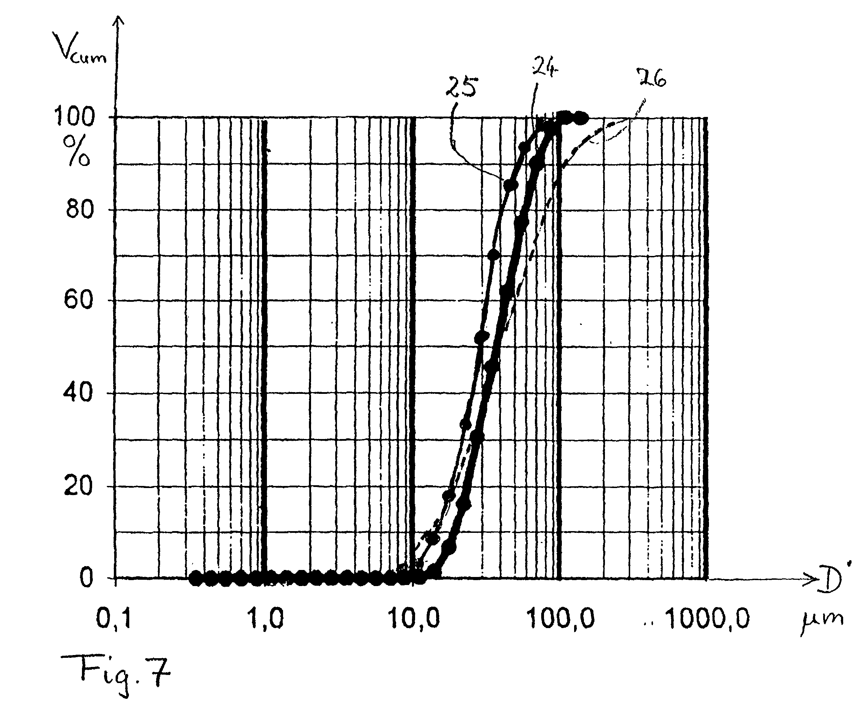

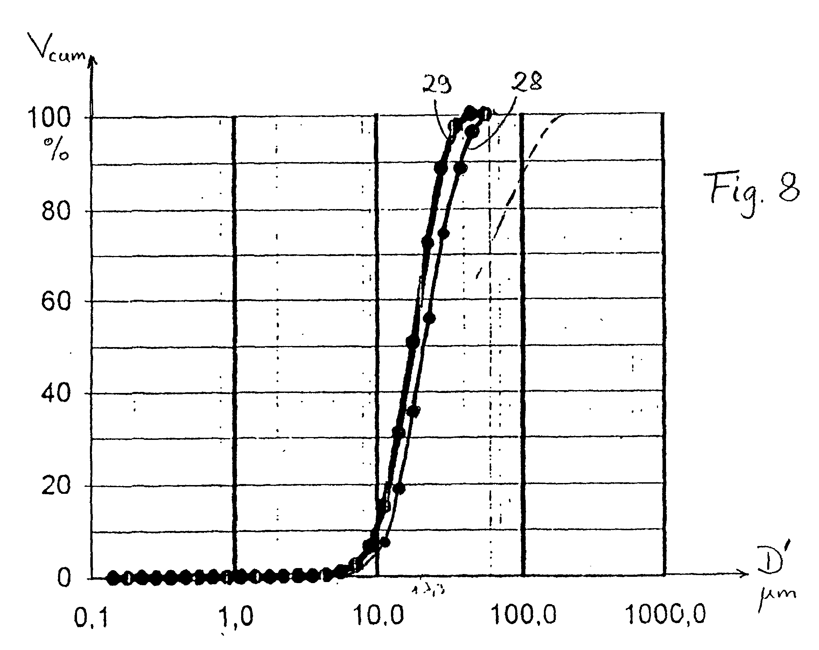

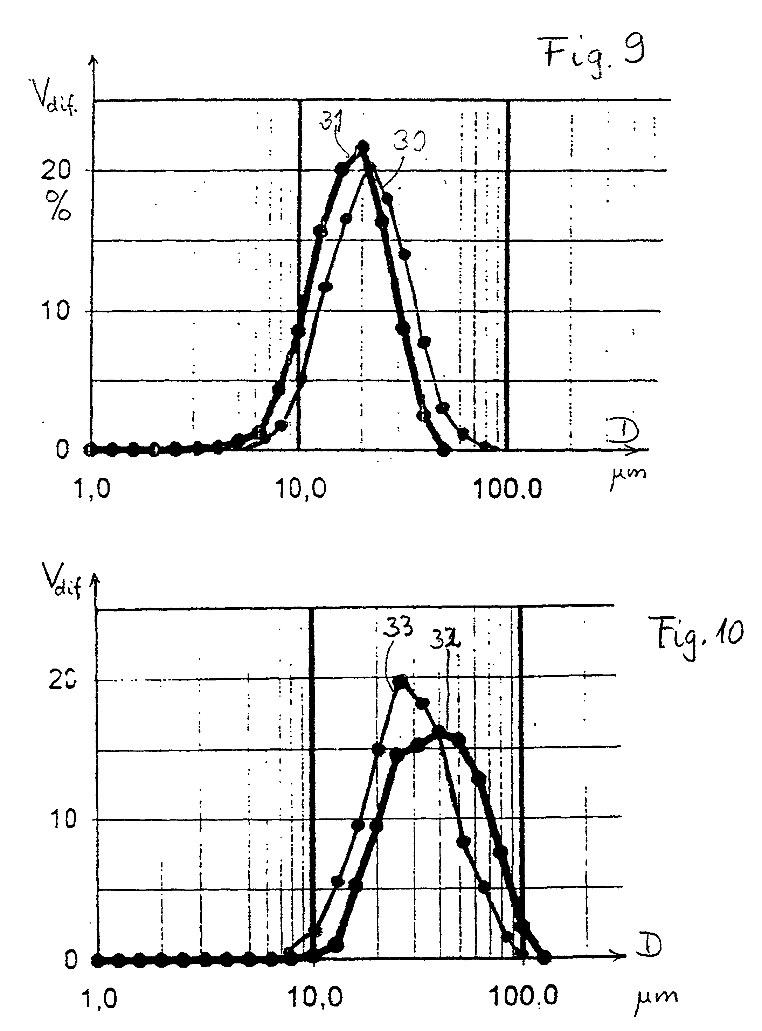

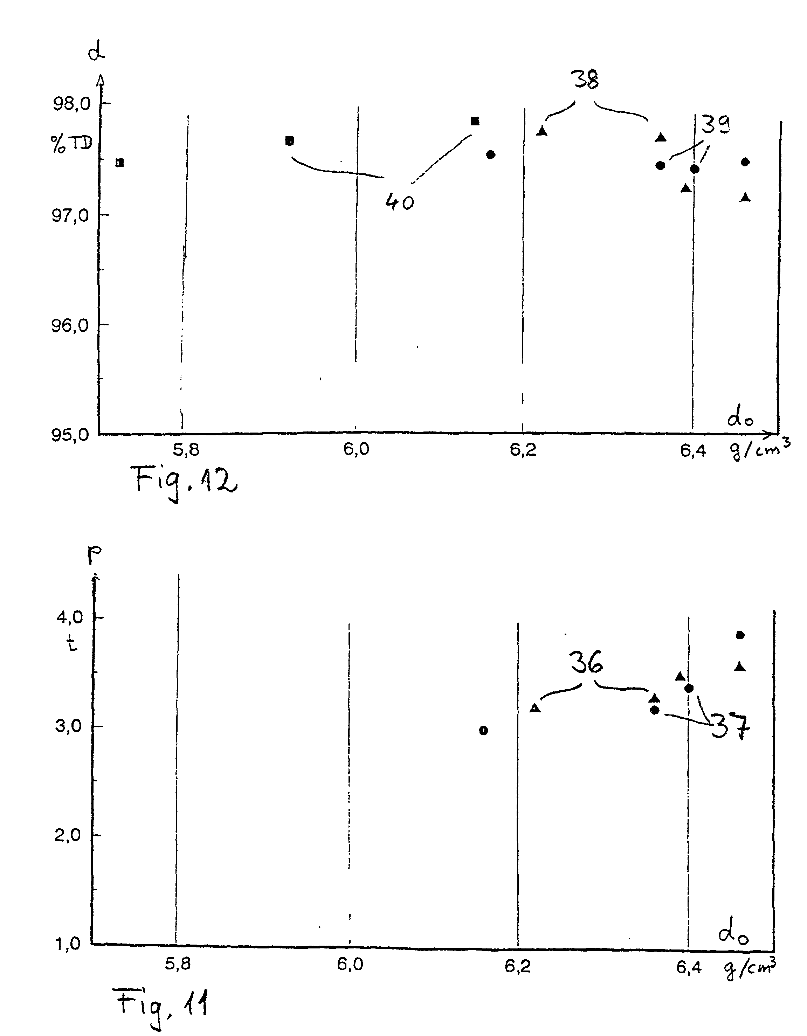

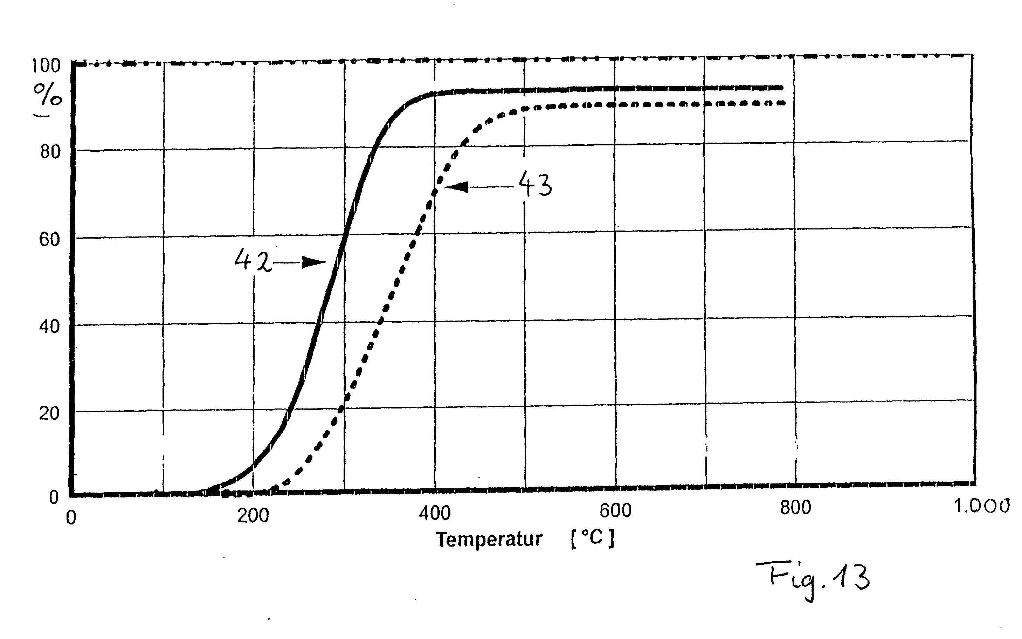

Figur 2 und Figur 3 zeigen das Schliffbild der gesinterten Tabletten vor und nach diesem Nachsintern. Dabei sind deutlich die eingeschlossenen Poren 16 erkennbar. Das vor dem Sintern zugegebene Titanstearylat ist zersetzt, wobei der organische Anteil verflüchtigt ist, der metallische Anteil liegt als Oxid 15 vor, das bei der Vergrößerung (1000fach) der Figur 2 praktisch nicht erkennbar ist.

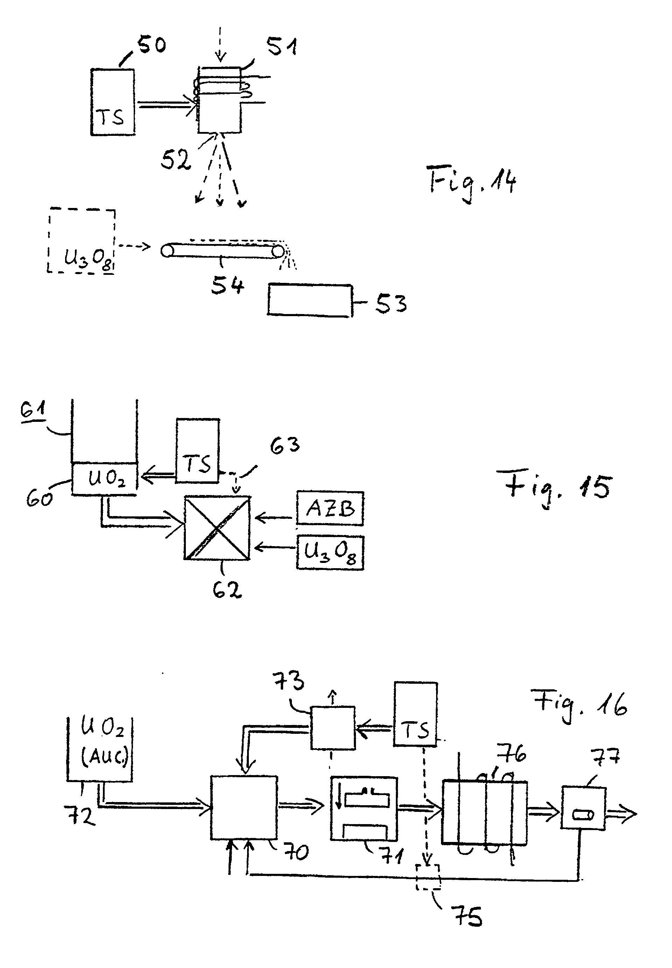

Zum Vergleich wurde dem Taumelmischer 5 statt Titanstearylat (TS) in einem Vergleichsversuch eine gleiche Menge Aluminiumdistearat (AS) beigegeben. Die entsprechenden Schliffbilder sind in den Figuren 4 und 5 dargestellt.

Vor dem Nachsintern betrug die mittlere Teilchengröße, bestimmt als lineares Interzept bei der optischen Ausmessung der Schliffbilder, für die TS-Proben 13,50 µm und für die AS-Proben 10,93 µm; die Umrechnung der linearen Interzept-Länge auf den räumlichen Mittelwert des Durchmessers, der unter Zugrundelegung einer Standardverteilung mit üblichen Rechenprogrammen durchgeführt wurde, ergibt einen mittleren räumlichen Durchmesser (geometrisches Mittel) von 20,94 µm und ein logarithmisches Streumaß von 1,58 für die TS-Proben und einen entsprechenden Mittelwert von 17,13 µm mit einem Streumaß von 1,55 für die AS-Proben. Man erkennt,'daß TS das Korngrößenwachstum noch günstiger beeinflußt als AS und zu einem noch um etwa 2,5 µm größeren Korn führt. In beiden Fällen ist das Spektrum der auftretenden Korngrößen in einer günstigen Weise auf diesen Mittelwert konzentriert. Ferner ist bei den TS-Proben vorteilhaft, daß die Interzept-Länge in den einzelnen Bereichen des Tabletten-Querschnitts nicht sehr unterschiedlich ist, also das Korn im Zentrum der Tablette sich nur wenig von Korn am Rand unterscheidet.

Für die nachgesinteren TS-Proben beträgt der lineare Interzept 23,35 µm (AS-Proben: 16,79 µm) und die Umrechnung auf die räumliche Verteilung ergibt 37,29 µm mit einem logarithmischen Streumaß von 1,65 (AS-Proben: 27,05 µm, Streumaß 1,64)

Man entnimmt den Figuren 2 bis 5 ferner, daß durch das Nachsintern die Anzahl der kleinen Poren verringert wurde. Trotz dieses Verschwindens vieler Poren hat jedoch die Dichte der gesinterten Tabletten durch das Nachverdichten praktisch nicht zugenommen. Figur 6 zeigt den Unterschied d' (in Bruchteilen eines Prozents der theoretischen Dichte) zwischen der Sinterdichte d vor und nach dem Sintern für TS-Proben 20, AS-Proben 21 sowie für Proben, die ohne diesen Zusatz und ohne Porenbildner hergestellt wurden. Der Zuwachs ist für AS- und TS-Proben praktisch gleich und liegt bei etwa 0,5 % der theoretischen Dichte, unter dem entsprechenden Wert (0,6 bis 0,9 % theoretischer Dichte) für die Zusatz-freien Proben 22 und auf einem noch als günstig angesehenen Wert.

In Figur 7 zeigt die Kurve 24 den Verlauf der kumulierten Kornvolumina der nachgesinterten TS-Proben als Funktion eines Grenzwertes D' für den Korndurchmesser. Man erkennt, daß 99 % und mehr des gesamten Kornvolumens von Körnern mit einem Durchmesser unter einem Grenzwert D' = 100 µm gebildet werden, während nur etwa 32 % des gesamten Tablettenvolumens von Körnern gebildet werden, deren Durchmesser unter einem Grenzwert D' = 20 µm liegen. Die entsprechende Kurve 25 für die AS-Proben ist entsprechend den um etwa 10 µm kleineren Körnern verschoben. Mit 26 ist der ungefähre Verlauf einer ähnlichen Kurve gezeigt, die in einem anderen Versuch aus einem Pulver gewonnen wurde, dem zur Erzeugung größerer Körner Titandioxid beigemischt wurde. Körner, deren Durchmesser nach dem Verdichten über einem Grenzwert D' = 100 µm liegen, tragen also bei Titanoxid-dotierten Pulvern wesentlich stärker zum gesamten Volumen der Tablette bei.

In Figur 8 ist der entsprechende Volumenanteil als Funktion des Korndurchmessers für die gesinterten Tabletten vor dem Nachverdichten gezeigt. Auch hier liegt für die TS-Probe (Kurve 28) jeweils bei einem Grenzwert D des Korndurchmessers der Volumenanteil, der von Körnern mit einem unter diesem Grenzwert liegenden Durchmesser gebildet werden, unter dem Volumenanteil der entsprechenden Körnern der AS-Probe (Kurve 29), wobei jedoch in beiden Fällen die Körner, deren Durchmesser unter 100 µm liegen, in bei den Fällen praktisch 100 % des gesamten Tablettenvolumens ausmacht. Für die mit TiO₂ versetzten Proben jedoch liegt der entsprechende Volumenanteil von Körnern mit einem Durchmesser unter dem Grenzwert D' = 100 µm etwa bei 90 %, d.h. 10 % des Tablettenvolumens wird von Körnern gebildet, die als zu groß angesehen werden.

Ordnet man die auftretenden Körner in Korngrößen-Klassen mit einem entsprechenden Korndurchmesser D, so zeigt Figur 9, welchen Anteil jeweils die Körner einer Klasse am Gesamtvolumen der Tabletten der TS-Proben (Kurve 30) bzw. AS-Proben (Kurve 31) vor dem Nachverdichten haben. Figur 10 zeigt die gleichen Kurven nach dem Nachverdichten. Diese Kurvenverteilung ist für die TS-Proben (Kurve 32) noch günstiger als die Verteilung der AS-Proben (Kurve 33), die bisher als optimaler Kompromiß zwischen einem guten Betriebsverhalten und einem günstigen Herstellungsverfahren angesehen wurde und Sinterkörpern überlegen ist, bei denen dem Brennstoffpulver Titanoxide zur Erhöhung des Korngrößenwachstums beigemischt werden.

Gegenüber einem solchen, aus einem Titanoxid enthaltenen Pulver hergestellten Sinterkörper ergibt sich auch die verfahrensmäßige Vereinfachung, daß das Titanstearylat (ähnlich wie Aluminiumstearat) gleichzeitig wegen seiner wachsartigen Konsistenz auch als Schmiermittel beim Pressen der Grünlinge wirkt. Die Grünlingspresse wurde mit einer Pulvermischung, die AS bzw. TS als Schmiermittel enthält, gefüllt und mit einer Masse von 3,2 t belastet. Durch diesen Preßdruck wurde bei AS eine Dichte d₀ von 6,36 g/cm³, für TS von 6,22 g/cm³ gemessen. Diese und weitere Meßpunkte 36 der Grünlingsdichte D₀ für TS-enthaltende Grünlinge (bzw. Meßpunkte 37 für AS) zeigt die Figur 11.

In Figur 12 sind mit den Meßpunkten 38 und 39 die bei diesen Grünlingsdichten do durch das anschließende Sintern erzeugten Sinterdichten des fertigen Sinterkörpers dargestellt. Der Vergleich mit Sinterkörpern, denen kein solcher Zusatz beigegeben wurde (Meßpunkte 40) zeigt, daß ohne dieses Mittel nur geringere Grünlingsdichten erzeugbar sind, daß aber die Sinterdichte durch die Dotierung mit AS oder TS, die das Kornwachstum fördern, nicht unzulässig erhöht wird.

Ein weiterer Vorteil ist, daß Titanstearylat praktisch für jedes Brennstoffpulver (also nicht nur das hier beschriebene Uranoxid, sondern auch Transuranoxide wie Thoriumoxid, Plutoniumoxid, aber auch abbrennbare Gifte wie Gadoliniumoxid, Ceroxid oder Erbiumoxid und Mischungen dieser Substanzen) verwendbar ist und das Einbringen dieses Schmier- und Sinterhilfsmittels sehr flexibel gestaltet werden kann; hierzu ist kein eigener Verfahrensschritt nötig, sondern die TS-Zugabe kann mit anderen Verfahrensschritten kombiniert werden. Es verliert seine positive Wirkung auf den Sinterkörper selbst dann nicht, wenn bereits der rückgeführte Schleif-Schlamm oder Grünlings-Abfälle mit TS getränkt oder vermischt werden, bevor sie anschließend im Oxidationsofen 4 (Figur 1) zu U₃O₈ oxidiert werden. Es können nämlich durchaus lokale Anhäufungen von TS im Pulver vorliegen, da dieser Zusatz beim Sintern eine "Fernwirkung" hervorruft.

Während bei Titanoxiden, Nioboxid oder anderen Oxidsystemen, die zur Verbesserung des Kornwachstums vorgeschlagen sind und mit einer beschränkten Diffusionslänge (etwa 5 bis 25 µm, je nach Temperatur und Zeit des Sintervorgangs) ihre positive Wirkung auf das Sintern erzielen können, stellt TS ein mobiles System mit Fernwirkung dar. Werden also größere lokale Ansammlungen in das Pulver eingebracht, so wirken diese lediglich als ein Titan-Depot, das beim Sintern für eine praktisch gleichmäßige Ausbreitung sorgt. Daher ist diese Wirkung weitgehend unabhängig von den Durchmessern des verwendeten Brennstoffpulvers und der Art der Pulverherstellung.

Die thermischen Eigenschaften gehen aus einem Versuch hervor, bei dem das in groben Bruchstücken angelieferte, reine TS (und zum Vergleich auch AS) unter der für das Sintern vorgesehenen Sinteratmosphäre mit einer Geschwindigkeit von 5 °C/min. auf 1000 °C aufgeheizt wurde. Aus dem dabei auftretenden Gewichtsverlust (Figur 13) entnimmt man, daß die thermische Zersetzung etwa bei 180 °C einsetzt (Kurve 42 in Figur 13), also etwa bei dem Schmelzpunkt (200 °C). Sie ist bei 400 °C abgeschlossen und führt zu einem festen Rückstand, der etwa 8 % beträgt. Das ist praktisch das Gewicht von stöchiometrisch gebildetem TiO₂. Für AS (Kurve 43) ergibt sich ein qualitativ ähnlicher, aber zu höheren Temperaturen verschobener Verlauf.

Diese Verhalten ermöglicht, TS auch in flüssiger Form zum Einbringen in das Brennstoffpulver zu verwenden, wie Figur 14 zeigt. Dabei wird das angelieferte Titanstearylat (Position 50) in eine beheizbare Sprüheinrichtung 51 eingebracht, in der diese wachsartige Substanz komprimiert und unter kurzzeitiger, lokaler Erhitzung durch eine Düse 52 in flüssiger Form aufgesprüht wird, wobei es sofort wieder erkaltet und sich als feines Pulver auf einem zu einem Sammelbehälter 53 führenden Förderband 54 oder in einer ähnlichen Auffang-Einrichtung niederschlägt. Dieses Pulver kann dann direkt in den Taumelmischer 5 (Figur 1) zu der Pulvermischung aus Brennstoffpulver und Porenbildner zugemischt werden, es kann aber auch, wie durch Position 55 in Figur 1 dargestellt ist, direkt dem aus der Konvertierungsanlage 1 kommenden Brennstoffpulver zugemischt werden. Darüber hinaus kann die erwähnte Auffangeinrichtung (z.B. Förderband 54 und Sammelbehälter 53) benutzt werden, um TS einer anderen Komponente der Pulvermischung zuzuführen, z.B. dem bereits mehrfach erwähnten U₃O₈.

Nach einer anderen Variante kann das angelieferte TS im Behälter 51 durch Zugabe eines geeigneten Lösungsmittels gelöst werden, wobei dann eine Beheizung entfallen kann. Das Lösungsmittel (vorzugsweise ein organisches Lösungsmittel) kann dann bereits beim Versprühen der Lösung verdampft werden, es ist jedoch nicht schädlich, wenn ein damit besprühtes Pulver auch in einem etwas befeuchteten Zustand in einen Pulvermischer eingegeben wird.

Häufig enthält die Konversionsanlage in ihrer Endstufe einen Drehrohrofen, Wirbelbett-Ofen oder eine ähnliche Einrichtung, in dem bei der Konversion ein weiterverarbeitbares Pulver aus Uranoxid gebildet wird. Figur 15 zeigt, daß das angelieferte TS der entsprechenden Endstufe 60 der Konversionsanlage 61 direkt zugemischt werden kann. Häufig fällt das Brennstoffpulver aus der Konversionsanlage bereits in einer rieselfähigen Form an, die ohne weiteres in einem entsprechenden Mischer 62 mit anderen Zusätzen, z.B. dem zu U₃O₈ weiterverarbeiteten Abfall aus dem Preß- und Sinterprozeß und/oder einem Porenbildner (vorzugsweise das bereits erwähnte AZB) vermischt wird. Mit Position 63 ist in Figur 15 angedeutet, daß ein TS-Pulver zusammen mit diesen Zusätzen in einem entsprechenden Pulvermischer eingespeist werden kann.

Zum Zumischen von TS zu dem Brennstoffpulver vor dem Pressen können allgemein insbesondere Taumelmischer, Drehmischer, Scheibenmischer, Pflugscharmischer, Rotationsmischer oder Schüttelmischer verwendet werden. Die Mischzeit liegt dabei unter 60 Minuten, wobei mindestens 1 Minute erforderlich erscheint, in der Regel 6 bis 40 Minuten ausreichen.

Vor allem in den Fällen, in dem das anfallende Brennstoffpulver noch gemahlen werden muß, kann eine entsprechende Mühle (z.B. eine Kollermühle, Stiftmühle, Kugelmühle, Hammermühle oder Adritormühle) verwendet werden, in der das TS zusammen mit dem Brennstoffpulver aufgemahlen wird.

Da der mehrfach erwähnte Abfall aus der Tablettenfertigung häufig in Bruchstücken (z.B. auch zerbrochenen Grünlingen) vorliegt, wird der Oxidationsofen 4 der Figur 1 dazu verwendet, durch Bildung von U₃O₈ eine definierte Oxidationsstufe einzustellen, wobei größere Bruchstücke in der Regel zu einem feinen Pulver zerfallen. Dieses U₃O₈-Pulver setzt auch die Oberflächenaktivität von frisch erzeugtem Brennstoffpulver herab, das ohne diesen Zusatz pyrophore Eigenschaften hat. Häufig beträgt das Mischungsverhältnis von UO₂ zu U₃O₈ für die zum Pressen der Grünlinge verwendete Pulvermischung etwa 2:1 bis 3:1. Es ist bekannt, daß diese Zugabe von U₃O₈ sich auch günstig auf das Sinterverhalten auswirkt und eine zu hohe Verdichtung verhindert, d.h. selbst als Porenbildner wirkt. Allerdings werden durch diese porenbildende Wirkung nur in beschränktem Maß große Poren erzeugt, so daß auf eine Zugabe von etwa 0,1 bis 2 % eines weiteren Porenbildners (z.B. das erwähnte AZB) in der Regel nicht verzichtet wird.

Bei manchen Konversionsverfahren, z.B. der Fällung des Urans aus dem UF₆-Gas als Ammoniumuranylcarbonat (AUC), entsteht ein Pulver, das an sich bereits ohne weitere Zwischenbearbeitung in eine Presse eingefüllt und dort zu Grünlingen von praktisch homogener Dichte und guter Qualität verpreßt werden kann. Da jedoch beim Sintern eines derartigen Grünlings die Gefahr verstärkt ist, daß beim Sintern eine zu geringe Porosität entsteht, die außerdem weitgehend aus kleinen Poren besteht und beim Nachsintern weiter verschwindet, ist auch in diesem Fall ein Mischer 70 vor der Presse 71 zum Verpressen der Grünlinge ratsam. In diesem Mischer können dann die porenbildenden Zusätze zusammen mit TS-Pulver und dem aus der Konversionsanlage 72 entnommenen Brennstoffpulver vermischt werden. In Figur 16 ist zur Bildung des TS-Pulvers eine Wirbelbett-Mühle 73 vorgesehen, also eine Einrichtung, in der eine Schüttung aus TS-Brocken durch einen heftigen Gasstrom in Bewegung gehalten und die Brocken aneinander zerrieben werden. Dabei ist in Figur 16 durch die Position 75 zusätzlich gezeigt, daß Bruchstücke, wie sie z.B. bei der Qualitätsprüfung und dem Schleifen der dem Sinterofen 76 entnommenen Sinterkörper in der Verarbeitungsendstufe 77 anfallen können, zusammen mit mindestens einem Teil des TS aufgemahlen werden können. Wie bereits anhand der Figur 14 erwähnt wurde, kann ein bereits als Pulver vorliegender, rezyklierter Brennstoff (der z.B. aus einem Oxidationsofen entnommen ist) mit TS versetzt werden.

Die Gesamtmenge des zuzusetzenden TS beträgt vorteilhaft 15 bis 1500 ppm (bezogen auf Titan und das Uran der Pulvermischung), vorzugsweise 40 bis 500 ppm.

Die Verwendung von Titanstearylat als kombiniertes Schmiermittel und Sinterhilfsmittel bietet somit eine große Flexibilität bei der Herstellung von Kernbrennstoff-Sinterkörpern, vermeidet störende Belastungen der Anlage und des Abluftsystems weitgehend, senkt den Verschleiß der Pressen und Sinteröfen und führt zu einem Brennstoff mit günstigen Eigenschaften, die bisher nicht oder nur unter erheblichen Nachteilen bei der Fertigung erreichbar waren.

## Patentansprüche

1. Verfahren zur Herstellung von Sinterkörpern durch Pressen und Sintern eines Kernbrennstoff und einen Zusatz enthaltenden oxidischen Pulvers, wobei der Zusatz wenigstens ein Schmiermittel und/oder ein Sinterhilfsmittel enthält,
**dadurch gekennzeichnet, daß** ein Titanstearylat als Schmiermittel und Sinterhilfsmittel verwendet wird.

2. Verfahren nach Anspruch 1,
**dadurch gekennzeichnet, daß** als Kernbrennstoff mindestens ein aus einer Schwermetallkomponente gebildetes Oxid verwendet wird, dessen Schwermetallkomponente aus Uran und gegebenenfalls mindestens einem Transuran besteht und dem Kernbrennstoff Titanstearylat mit 15 bis 1500 ppm Titan, bezogen auf die Schwermetallkomponente, zugesetzt wird.

3. Verfahren nach Anspruch 2,
**dadurch gekennzeichnet, daß** das Titanstearylat in Form von Titantetrastearylat mit mindestens 40 ppm (vorzugsweise mindestens 80 ppm) und höchstens 500 ppm (vorzugsweise höchsten 200 ppm) Titan, bezogen auf die Schwermetallkomponente, zugesetzt wird.

4. Verfahren nach einem der Ansprüche 1 bis 3,
**dadurch gekennzeichnet, daß** bei Temperaturen von mindestens 1050 °C, vorzugsweise mindestens 1100 °C, und höchstens 2200 °C, vorzugsweise höchstens 850 °C, für mindestens 0,5 Stunden, vorzugsweise mindestens 1 Stunde, bis höchstens 8 Stunden, vorzugsweise bis höchstens 5 Stunden gesintert wird.

5. Verfahren nach einem der Ansprüche 1 bis 4,
**dadurch gekennzeichnet, daß** in einer reduzierenden Atmosphäre, vorzugsweise einer insbesondere trockenen Wasserstoffatmosphäre gesintert wird.

6. Verfahren nach einem der Ansprüche 1 bis 5,
**dadurch gekennzeichnet, daß** bei der Bildung des oxidischen Pulvers ein Zusatzpulver aus mindestens einem Teil des Titanstearylats und ein mindestens einen Teil des Kernbrennstoffs enthaltendes Brennstoffpulver miteinander gemischt werden.

7. Verfahren nach Anspruch 6,
**dadurch gekennzeichnet, daß** das Zusatzpulver und das Brennstoffpulver durch gemeinsames Aufmahlen gemischt werden.

8. Verfahren nach Anspruch 6 oder 7,
**dadurch gekennzeichnet, daß** beim Mischen ein Porenbildner, insbesondere ein Pulver aus Azodicarbonsäurediamid, zugegeben wird.

9. Verfahren nach Anspruch 8,
**dadurch gekennzeichnet, daß** der Porenbildner in einer Menge zugegeben wird, die zwischen 0,1 und 2 % beträgt.

10. Verfahren nach einem der Ansprüche 6 bis 9,
**dadurch gekennzeichnet, daß** beim Mischen wiederverwendbarer Abfall zugegeben wird, der bei der Herstellung der Sinterkörper angefallen ist.

11. Verfahren nach Anspruch 10,
**dadurch gekennzeichnet, daß** der wiederverwendbare Abfall zumindest überwiegend aus U₂O₃ besteht.

12. Verfahren nach Anspruch 11,
**dadurch gekennzeichnet, daß** zwischen 20 und 35 % des oxidischen Pulvers wiederverwendbaren Abfall, bezogen jeweils auf die Schwermetallkomponente, enthält.

13. Verfahren nach einem der Ansprüche 6 bis 12,
**dadurch gekennzeichnet, daß** das Zusatzpulver sowohl aus wiederverwendbarem Abfall als auch aus mindestens einem Teil des Titanstearylats gebildet wird.

14. Verfahren nach Anspruch 13,
**dadurch gekennzeichnet, daß** der Anteil des Titanstearylats und des wiederverwendbaren Abfalls gemeinsam gemahlen werden.

15. Verfahren nach einem der Ansprüche 6 bis 14,
**dadurch gekennzeichnet, daß** beim Mischen der Kernbrennstoff und das Titanstearylat gemeinsam gemahlen werden.

16. Verfahren nach Anspruch 13 oder 14,
**dadurch gekennzeichnet, daß** mindestens eine Minute, vorzugsweise mindestens sechs Minuten, und höchstens 60 Minuten, vorzugsweise höchstens 40 Minuten gemahlen wird.

17. Verfahren nach einem der Ansprüche 6 bis 16,
**dadurch gekennzeichnet, daß** zum Mischen ein Granulat des Brennstoff-Pulvers gebildet und anschließend das Zusatzpulver zum Granulat zugemischt wird.

18. Verfahren nach einem der Ansprüche 6 bis 17,
**dadurch gekennzeichnet, daß** das Zusatzpulver durch Mahlen des Titanstearylats unter mindestens einem bewegten Gasstrom gebildet wird.

19. Verfahren nach einem der Ansprüche 6 bis 15,
**dadurch gekennzeichnet, daß** zumindest ein Teil des Zusatzpulvers durch Verflüssigen und anschließendes Versprühen des Titanstearylats gebildet wird.

20. Verfahren nach Anspruch 17,
**dadurch gekennzeichnet, daß** das Titanstearylat durch Lösen in einem Lösungsmittel oder durch vorübergehendes Heizen verflüssigt wird.

21. Verfahren nach einem der Ansprüche 16 bis 20,
**dadurch gekennzeichnet, daß** das Zusatzpulver mit einer Korngröße von mindestens 0,2 µm, vorzugsweise mindestens 0,5 µm, und höchstens 5 µm, vorzugsweise höchstens 3 µm, gebildet wird.

22. Verfahren nach einem der Ansprüche 1 bis 5,
**dadurch gekennzeichnet, daß** zumindest ein Teil des oxidischen Pulvers gebildet wird, indem Tetrastearylat in flüssigem Zustand auf einen entsprechenden Teil des Kernbrennstoffs gesprüht wird und daß die gesamte Menge des oxidischen Pulvers vor dem Pressen gemischt, vorzugsweise in einer Mühle gemischt, wird.

23. Verfahren nach einem der Ansprüche 1 bis 5,
**dadurch gekennzeichnet, daß** der Kernbrennstoff in einem Verfahren zur Konversion aus gasförmigen Verbindungen des Kernbrennstoffs oder aus metallischem Kernbrennstoff gebildet wird und das Titanstearylat in einer Endstufe der Konversion dem Kernbrennstoff zugegeben wird.

24. Sinterkörper aus oxidischem Kernbrennstoff für ein Kernreaktor-Brennelement, mit Körnern einer mittleren Interzeptlänge zwischen 8 und 70 µm und mit einer Sinterdichte von 93 bis 98 % der theoretischen Dichte, wobei höchstens 5 % des Sinterkörper-Volumens von Körnern mit einem Durchmesser über 100 µm gebildet werden und im Sinterkörper Reste eines Sinterhilfsmittels eingeschlossen sind,
**dadurch gekennzeichnet, daß** die Reste 15 bis 1500 ppm Titan, bezogen auf die metallische Komponente des oxidischen Kernbrennstoffs enthalten.

25. Sinterkörper nach Anspruch 24,
**dadurch gekennzeichnet, daß** die Reste mindestens 40 ppm, vorzugsweise mindestens 70 ppm, und höchstens 1200 ppm , vorzugsweise höchstens 500 ppm Titan enthalten.

26. Sinterkörper nach Anspruch 24 oder 25,
**dadurch gekennzeichnet, daß** die Interzeptlänge mindestens 10 µm und höchstens 40 µm, vorzugsweise höchstens 35 µm, beträgt.

27. Sinterkörper nach einem der Ansprüche 24 bis 26,
**dadurch gekennzeichnet, daß** der Kernbrennstoff mindestens Uranoxid, gegebenenfalls noch mindestens ein Oxids eines Transurans enthält.

28. Sinterkörper nach einem der Ansprüche 24 bis 27,
**dadurch gekennzeichnet, daß** der Kernbrennstoff noch ein abbrennbares Neutronengift, vorzugsweise ein oxidisches abbrennbares Neutronengift, enthält.

29. Sinterkörper nach einem der Ansprüche 24 bis 28,
**dadurch gekennzeichnet, daß** das Titan durch Zersetzung von einem Titanstearylat gebildet ist.

## Claims

1. Process for producing sintered bodies by pressing and sintering of a nuclear fuel and oxidic powder which contains an additive, the additive containing at least one lubricant and/or a sintering aid, **characterized in that** a titanium stearylate is used as lubricant and sintering aid.

2. Process according to Claim 1, **characterized in that** the nuclear fuel used is at least one oxide which is formed from a heavy metal component and the heavy metal component of which comprises uranium and, if appropriate, at least one transuranium element, and titanium stearylate is added to the nuclear fuel in an amount of from 15 to 1500 ppm of titanium, based on the heavy metal component.

3. Process according to Claim 2, **characterized in that** the titanium stearylate is added in the form of titanium tetrastearylate comprising at least 40 ppm (preferably at least 80 ppm) and at most 500 ppm (preferably at most 200 ppm) of titanium, based on the heavy metal component.

4. Process according to one of Claims 1 to 3, **characterized in that** sintering is carried out at temperatures of at least 1050°C, preferably at least 1100°C, and at most 2200°C, preferably at most 850°C, for at least 0.5 hour, preferably at least 1 hour, up to at most 8 hours, preferably up to at most 5 hours.

5. Process according to one of Claims 1 to 4, **characterized in that** sintering is carried out in a reducing atmosphere, preferably an in particular dry hydrogen atmosphere.

6. Process according to one of Claims 1 to 5, **characterized in that** during the formation of the oxidic powder, an additive powder comprising at least some of the titanium stearylate and a fuel powder containing at least some of the nuclear fuel are mixed with one another.

7. Process according to Claim 6, **characterized in that** the additive powder and the fuel powder are mixed by being milled together.

8. Process according to Claim 6 or 7, **characterized in that** a pore-forming agent, in particular a powder comprising azodicarboxylic diamide, is added during mixing.

9. Process according to Claim 8, **characterized in that** the pore-forming agent is added in an amount of between 0.1 and 2%.

10. Process according to one of Claims 6 to 9, **characterized in that** during mixing recyclable waste which is formed during the production of the sintered bodies is added.

11. Process according to Claim 10, **characterized in that** the recyclable waste comprises at least predominantly U₂O₃.

12. Process according to Claim 11, **characterized in that** between 20 and 35% of the oxidic powder contains recyclable waste, in each case based on the heavy metal component.

13. Process according to one of Claims 6 to 12, **characterized in that** the additive powder is formed from both recyclable waste and at least some of the titanium stearylate.

14. Process according to Claim 13, **characterized in that** the titanium stearylate fraction and the recyclable waste are milled together.

15. Process according to one of Claims 6 to 14, **characterized in that** during mixing the nuclear fuel and the titanium stearylate are milled together.

16. Process according to Claim 13 or 14, **characterized in that** milling is carried out for at least one minute, preferably at least six minutes, and at most 60 minutes, preferably at most 40 minutes.

17. Process according to one of Claims 6 to 16, **characterized in that**, for mixing, granules of the fuel powder are formed, and then the additive powder is admixed with the granules.

18. Process according to one of Claims 6 to 17, **characterized in that** the additive powder is formed by milling the titanium stearylate under at least one moving gas stream.

19. Process according to one of Claims 6 to 15, **characterized in that** at least some of the additive powder is formed by liquefying and then spraying the titanium stearylate.

20. Process according to Claim 17, **characterized in that** the titanium stearylate is liquefied by being dissolved in a solvent or by temporary heating.

21. Process according to one of Claims 16 to 20, **characterized in that** the additive powder is formed with a grain size of at least 0.2 µm, preferably at least 0.5 µm, and at most 5 µm, preferably at most 3 µm.

22. Process according to one of Claims 1 to 5, **characterized in that** at least some of the oxidic powder is formed by spraying tetrastearylate in the liquid state onto a corresponding amount of the nuclear fuel, and **in that** the entire quantity of the oxidic powder is mixed, preferably in a mill, prior to the pressing operation.

23. Process according to one of Claims 1 to 5, **characterized in that** the nuclear fuel is formed in a process for conversion from gaseous compounds of the nuclear fuel or from metallic nuclear fuel, and the titanium stearylate is added to the nuclear fuel in a final stage of the conversion.

24. Sintered body comprising oxidic nuclear fuel for a nuclear reactor fuel element, having grains with a mean intercept length of between 8 and 70 µm and having a sintered density of 93 to 98% of the theoretical density, at most 5% of the sintered body volume being formed by grains with a diameter of over 100 µm, and residues of a sintering aid being included in the sintered body, **characterized in that** the residues contain 15 to 1500 ppm of titanium, based on the metallic component of the oxidic nuclear fuel.

25. Sintered body according to Claim 24, **characterized in that** the residues contain at least 40 ppm, preferably at least 70 ppm, and at most 1200 ppm, preferably at most 500 ppm, of titanium.

26. Sintered body according to Claim 24 or 25, **characterized in that** the intercept length is at least 10 µm and at most 40 µm, preferably at most 35 µm.

27. Sintered body according to one of Claims 24 to 26, **characterized in that** the nuclear fuel contains at least uranium oxide, and if appropriate also at least one oxide of a transuranium element.

28. Sintered body according to one of Claims 24 to 27, **characterized in that** the nuclear fuel also contains a burnable poison, preferably an oxidic burnable poison.

29. Sintered body according to one of Claims 24 to 28, **characterized in that** the titanium is formed by decomposition of a titanium stearylate.

## Revendications

1. Procédé de fabrication de corps frittés par pressage et frittage d'une poudre d'oxyde contenant du combustible nucléaire et un additif, l'additif contenant au moins un agent lubrifiant et/ou un adjuvant de frittage, **caractérisé en ce que** l'on utilise comme agent lubrifiant et adjuvant de frittage un stéarylate de titane.

2. Procédé suivant la revendication 1, **caractérisé en ce que** l'on utilise comme combustible nucléaire au moins un oxyde formé à partir d'un constituant de métal lourd, dont le constituant de métal lourd est en uranium et le cas échéant en au moins un élément transuranien, et on ajoute au combustible nucléaire du stéarylate de titane, ayant de 15 à 1500 ppm de titane rapportés au constituant de métal lourd.

3. Procédé suivant la revendication 2, **caractérisé en ce que** le stéarylate de titane est sous la forme de tétrastéarylate de titane, ayant au moins 40 ppm (de préférence au moins 80 ppm), et au plus 500 ppm (de préférence au plus 200 ppm) de titane, rapportés au constituant de métal lourd.

4. Procédé suivant l'une des revendications 1 à 3, **caractérisé en ce que** l'on fritte à des températures d'au moins 1050°C, de préférence d'au moins 1100°C et d'au plus 2200°C, de préférence d'au plus 1850°C, pendant au moins une demi-heure, de préférence pendant au moins 1 h, jusqu'à au plus 8 h, de préférence jusqu'à au plus 5 h.

5. Procédé suivant l'une des revendications 1 à 4, **caractérisé en ce que** l'on fritte en atmosphère réductrice, de préférence dans une atmosphère d'hydrogène, notamment sèche.

6. Procédé suivant l'une des revendications 1 à 5, **caractérisé en ce que**, lors de la formation de la poudre d'oxyde, on mélange une poudre d'additif constituée d'au moins une partie du stéarylate de titane et d'une poudre de combustible contenant au moins une partie du combustible nucléaire.

7. Procédé suivant la revendication 6, **caractérisé en ce que** l'on mélange la poudre d'additif et la poudre de combustible en les broyant en commun.

8. Procédé suivant la revendication 6 ou 7, **caractérisé en ce que** l'on ajoute lors du mélange, un agent porogène, notamment une poudre en diamide d'acide azodicarboxylique.

9. Procédé suivant la revendication 8, **caractérisé en ce que** l'agent porogène est ajouté en une quantité qui représente entre 0,1 et 2 %.

10. Procédé suivant l'une des revendications 6 à 9, **caractérisé en ce que** lors du mélange, on ajoute un déchet réutilisable qui se forme lors de la fabrication des corps frittés.

11. Procédé suivant la revendication 10, **caractérisé en ce que** le déchet réutilisable est constitué au moins d'une manière prépondérante de U₂O₃.

12. Procédé suivant la revendication 11, **caractérisé en ce qu'**entre 20 et 35 % de la poudre d'oxyde contient du déchet réutilisable rapporté respectivement au constituant de métal lourd.

13. Procédé suivant l'une des revendications 6 à 12, **caractérisé en ce que** la poudre d'additif est formée tant de déchet réutilisable, que d'au moins une partie du stéarylate de titane.

14. Procédé suivant la revendication 13, **caractérisé en ce que** la proportion du stéarylate de titane et du déchet réutilisable sont broyés ensemble.

15. Procédé suivant l'une des revendications 6 à 14, **caractérisé en ce que** lors du mélange, le combustible nucléaire et le stéarylate de titane sont broyés ensemble.

16. Procédé suivant la revendication 13 ou 14, **caractérisé en ce que** l'on effectue le broyage pendant au moins 1 min et de préférence pendant au 6 min, et pendant au plus 60 min et de préférence pendant au plus 40 min.

17. Procédé suivant l'une des revendications 6 à 16, **caractérisé en ce que** pour le mélange, on forme un granulé de la poudre de combustible et ensuite, on mélange la poudre d'additif au granulé.

18. Procédé suivant l'une des revendications 6 à 17, **caractérisé en ce que** l'on forme la poudre d'additif en broyant le stéarylate de titane sous au moins un courant gazeux en mouvement.

19. Procédé suivant l'une des revendications 6 à 15, **caractérisé en ce que** l'on forme au moins une partie de la poudre d'additif, en liquéfiant et ensuite, en pulvérisant le stéarylate de titane.

20. Procédé suivant la revendication 17, **caractérisé en ce que** l'on liquéfie le stéarylate de titane par dissolution dans un solvant ou par chauffage temporaire.

21. Procédé suivant l'une des revendications 16 à 20, **caractérisé en ce que** l'on forme la poudre d'additif en lui donnant une granulométrie d'au moins 0,2 µm et de préférence d'au moins 0,5 µm, et d'au plus 5 µm, et de préférence d'au plus 3 µm.

22. Procédé suivant l'une des revendications 1 à 5, **caractérisé en ce que** l'on forme au moins une partie de la poudre d'oxyde en pulvérisant du tétrastéarylate à l'état liquide, sur une partie correspondante du combustible nucléaire et en mélangeant toute la quantité de la poudre d'oxyde, avant le pressage, de préférence dans un broyeur.

23. Procédé suivant l'une des revendications 1 à 5, **caractérisé en ce que** l'on forme le combustible nucléaire dans un procédé de conversion de composés gazeux du combustible nucléaire, ou de combustible nucléaire métallique, et **en ce que** l'on ajoute le stéarylate de titane au combustible nucléaire dans un stade final de la conversion.

24. Corps fritté en combustible nucléaire oxydé pour un assemblage combustible de réacteur nucléaire, à grains ayant une longueur moyenne d'intersection comprise entre 8 et 70 µm et une densité de frittage représentant de 93 à 98 % de la densité théorique, 5 % au plus du volume du corps fritté étant formés de grains d'un diamètre supérieur à 100 µm, et des résidus d'un adjuvant de frittage étant inclus dans le corps fritté, **caractérisé en ce que** les résidus contiennent de 15 à 1500 ppm de titane, rapportés au constituant métallique du combustible nucléaire d'oxyde.

25. Corps fritté suivant la revendication 24, **caractérisé en ce que** les restes contiennent au moins 40 ppm, et de préférence au moins 70 ppm, et au plus 1200 ppm, et de préférence au plus 500 ppm de titane.

26. Corps fritté suivant la revendication 24 ou 25, **caractérisé en ce que** la longueur d'intersection est d'au moins 10 µm et d'au plus 40 µm, et de préférence d'au plus 35 µm.

27. Corps fritté suivant l'une des revendications 24 à 26, **caractérisé en ce que** le combustible nucléaire contient au moins de l'oxyde d'uranium, le cas échéant aussi au moins un oxyde d'un élément transuranien.

28. Corps fritté suivant l'une des revendications 24 à 27, **caractérisé en ce que** le combustible nucléaire contient en plus un poison combustible de neutrons, de préférence un poison combustible de neutrons qui renferme de l'oxyde.

29. Corps fritté suivant l'une des revendications 24 à 28, **caractérisé en ce que** le titane est formé par décomposition d'un stéarylate de titane.
